(19) **Europäisches Patentamt / European Patent Office / Office européen des brevets**

(11) **EP 2 070 425 B1**

(12) **EUROPEAN PATENT SPECIFICATION**

(45) Date of publication and mention
of the grant of the patent:
**08.06.2011  Bulletin 2011/23**

(51) Int Cl.:
**A23G 9/34** (2006.01)

(21) Application number: **08168268.4**

(22) Date of filing: **04.11.2008**

(54) **Frozen confections**

Gefrorene Süßwaren

Confections surgelées

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **04.12.2007  EP 07122238
04.12.2007  EP 07122239**

(43) Date of publication of application:
**17.06.2009  Bulletin 2009/25**

(73) Proprietors:
• **Unilever PLC
London
EC4Y 0DY (GB)**
Designated Contracting States:
**CY GB IE MT**
• **Unilever N.V.
3013 AL Rotterdam (NL)**
Designated Contracting States:
**AT BE BG CH CZ DE DK EE ES FI FR GR HR HU IS IT LI LT LU LV MC NL NO PL PT RO SE SI SK TR**

(72) Inventor: **Wix, Loyd
Bedford, Bedfordshire MK44 1LQ (GB)**

(74) Representative: **Clarke, Christopher John
Unilever Patent Group
Colworth House
Sharnbrook
Bedford MK44 1LQ (GB)**

(56) References cited:
EP-A- 1 673 980        WO-A-99/02042
US-A1- 2003 031 758    US-A1- 2006 141 103
US-A1- 2007 134 404

• AKIN M.B., AKIN M.S., KIRMACI Z.: "Effects of inulin and sugar levels on the viability of yogurt and probiotic bacteria and the physical and sensory characteristics in probiotic ice-cream." FOOD CHEMISTRY, vol. 104, no. 1, 2007, pages 93-99, XP002466698 DEPARTMENT OF FOOD ENGINEERING, AGRICULTURAL FACULTY, HARRAN UNIVERSITY, 63040 SANLIURFA, TURKEY. TEL. +90 414 2470903. FAX +90 414 2474480. E-MAIL MUTLUAKIN(A) HARRAN.EDU.TR

## Description

### Technical Field of the invention

The present invention relates to frozen confections which are acidic, such as water ices, fruit ices, sorbets, frozen yoghurts and the like. In particular, it relates to acidic frozen confections in which some or all of the sugar is replaced with fructo-oligosaccharides.

### Background

Frozen confections normally contain relatively high amounts of sugar. However, consumers are increasingly concerned about health issues such as obesity and diabetes. Thus there is a demand for frozen confections that contain less sugar. However, simply removing sugar from frozen confections results in products that are not acceptable to consumers because they are not sufficiently sweet. They are also very hard because lowering the amount of sugar results in less freezing point depression, and hence a higher ice content. One approach has been to replace some of the sugars present in frozen confections with fructo-oligosaccharides such as inulin. Fructo-oligosaccharides are not digested in the human small intestine and thus have a lower caloric value, whilst also contributing dietary fibre. For example, EP 532 775 discloses foods, including ice creams, having a reduced sugar content wherein part of the sugar is replaced with inulin. US 2003/0031758 discloses methods for preparing nutritional frozen desserts having palatable characteristics.

Ice cream generally has an approximately neutral pH. In contrast, water ices, fruit ices, sorbets, frozen yoghurts and the like usually have a pH of about 4 or below. This presents a problem because fructo-oligosaccharides are hydrolysed to fructose when subjected to a combination of high temperatures and low pH, for example during pasteurization of acidic mixes. Consequently, the frozen confections do not have the desired low-calorie content. Simply raising the pH is not a satisfactory solution: although this prevents hydrolysis, it creates another problem, namely that the frozen confection loses its characteristic acidic taste. Adding acidic ingredients after pasteurization is not a practical solution either since these ingredients themselves must be pasteurized to ensure the microbiological safety of the product. Thus there remains a need for improved low-sugar acidic frozen confections.

### Brief description of the invention

We have now found that acidic frozen confections in which some or all of the sugar is replaced by fructo-oligosaccharides can be prepared, providing that a buffer is used. Accordingly, in a first aspect, the present invention provides a frozen confection having a pH of from 4 to 6, comprising (by weight of the confection) 2-12% of fructo-oligosaccharides and 0.6-4% of a buffer. The pH must be at least 4 so that hydrolysis is minimized. It must be no higher than 6, which is the pH of the mouth, so that the product has the desired acidic taste. Furthermore, high pHs require a large amount of buffer salt, and the resulting high concentration of cations can result in a salty/mineral off-flavour. The buffer not only keeps the pH at the desired value, but also acts as source of $H^+$ ions which provide the desired organoleptic perception of acidity .

Preferably the buffer comprises a weak acid selected from citric acid, malic acid, lactic acid, fumaric acid, ascorbic acid, tartaric acid, phosphoric acid, succinic acid or mixtures thereof. More preferably the buffer also comprises the sodium or potassium salt of the weak acid. Most preferably the buffer comprises citric acid and sodium citrate.

Preferably the pH is from 4.2 to 5.0, more preferably from 4.3 to 4.8, most preferably from 4.4 to 4.6.

Preferably the buffer is present in an amount of from 0.75 - 3 wt%, more preferably from 1-2 wt%.

Preferably the frozen confection contains 3-10wt% fructo-oligosaccharides, more preferably 4-9wt%, most preferably 5-8wt%.

Preferably the fructo-oligosaccharide is selected from the group consisting of oligofructose, inulin, kestose and mixtures thereof. Most preferably the fructo-oligosaccharide is oligofructose or kestose.

Preferably the frozen confection is water ice, fruit ice, sorbet or frozen yoghurt.

Preferably the frozen confection comprises less than 1 wt% protein.

In a related aspect, the present invention provides a process for manufacturing a frozen confection according to the first aspect of the invention, the process comprising the steps of:

(a) preparing a mix having a pH of from 4 to 6 and comprising 2-12 wt% fructo-oligosaccharides and 0.6-4wt% of a buffer;
(b) pasteurising and optionally homogenising the mix; then
(c) freezing and optionally aerating the mix to produce the frozen confection.

**Detailed Description**

Unless defined otherwise, all technical and scientific terms used herein have the same meaning as commonly understood by one of ordinary skill in the art. Definitions and descriptions of various terms and techniques used in frozen confectionery manufacture are found in Ice Cream, 6th Edition, R. T. Marshall, H. D. Goff and R. W. Hartel (2003), Kluwer Academic/Plenum Publishers. All percentages, unless otherwise stated, refer to the percentage by weight, with the exception of percentages cited in relation to overrun.

Fructo-oligosaccharides

Fructo-oligosaccharides are composed of linear chains of fructose units linked by ß(2-1) bonds and often terminated by a glucose unit. Fructo-oligosaccharides include inulin, oligofructose (also sometimes called oligofructan) and kestose.

Inulin occurs in many crops, and on an industrial scale it is usually extracted from chicory roots. The degree of polymerization (DP) of inulin usually ranges from 10 to about 60. Preferably the DP is below 40, more preferably below 20. Inulin is available from the ORAFTI company under the trade name Raftiline™. Inulin has a metabolisable energy content (calorie conversion factor) of 1.2 kcal (5.0 kJ) $g^{-1}$, whereas fructose has a metabolisable energy content of 4 kcal (16.8 kJ) $g^{-1}$.

Oligofructose has between 2 and 7 fructose units. Oligofructose is obtained from inulin by partial enzymatic hydrolysis. Oligofructose has a metabolisable energy content of 2 kcal (8.4 kJ) $g^{-1}$. Oligofructose is available from ORAFTI under the trade name Raftlilose™. Another form of oligofructose is kestose (available from Beghin-Meiji). Kestose consists of 3 fructose units, and therefore is particularly effective at providing freezing point depression. Preferably the fructo-oligosaccharide is oligofructose or kestose, since these are of relatively low molecular weight, and hence provide sweetness and freezing point depression.

Preferably the frozen confection contains at least 3wt% fructo-oligosaccharides, more preferably at least 4wt%, most preferably at least 5wt%. Preferably the frozen confection contains at most 10wt% fructo-oligosaccharides, more preferably at most 9 wt%, most preferably at most 8 wt%. The greater the amount of fructo-oligosaccharides present, the more sugar can be replaced. However, the amount of fructo-oligosaccharide should not be too high in order to avoid the risk of digestive intolerance. Moreover, too great an amount of high molecular weight fructo-oligosaccharides (e.g. inulin) can result in frozen confections that are too hard (due to insufficient freezing point depression) and / or fructo-oligosaccharide insolubility.

Buffer

Buffers resist change in pH upon addition of small amounts of acid or base, or upon dilution. The buffer systems of the present invention are capable of maintaining the pH of the frozen confection in the range of 4 to 6. The pH of the frozen confection means the pH when in liquid form, e.g. as an unfrozen mix or after melting. Buffers consist of a weak acid and a base. The buffering action is the result of the equilibrium between the weak acid (HA) and the conjugate base ($A^-$)

$$HA(aq) + H_2O(l) \leftrightarrow H_3O^+(aq) + A^-(aq)$$

The buffer not only sets the pH in the desired range, but also provides a source of stored hydrogen ions which provide the acidic taste. The total amount of buffer is defined as the amount of acid plus conjugate base.

Preferably the pH is less than 5, more preferably less than 4.8, most preferably less than 4.6. Preferably the pH is greater than 4.2, more preferably greater than 4.3, most preferably greater than 4.4. The higher the pH, the lower is the rate of hydrolysis of fructo-oligosaccharides during pasteurization. However, if the pH is too high, the organoleptic perception of acidity is reduced. Moreover, high pHs require greater amounts of base, which can result in salty / mineral off-flavours due to the high concentration of the cation from the base.

The acid in the buffer can be provided in the form of a pure acid (e.g. citric acid monohydrate) or may be present in other ingredients (e.g. citric acid or malic acid in fruit juice). The acid naturally present in such ingredients must be taken into account when determining the amount of base required to produce a buffer having the desired pH and when determining the total amount of buffer.

The acid most commonly found in water ices, fruit ices and sorbets is citric acid, since citrus fruits (e.g. lemon, orange, lime and grapefruit) are popular flavours for these products. However, other acids may be used, for example malic acid (e.g. in apple products), tartaric acid (e.g. in grape products), phosphoric acid (e.g.in cola products) or lactic acid (e.g. in yoghurt). Other acids, such as fumaric acid, ascorbic acid or succinic acid may be used. Preferably the base is the sodium or potassium salt of the acid. Sodium and potassium salts are generally soluble, food grade and readily available. In a particularly preferred embodiment, the buffer comprises citric acid and sodium citrate.

Mixtures of different acids may be present. Where the mixture consists predominantly of one acid, a conjugate base of that acid is preferably used to make the buffer. So for example if the acid is predominantly citric acid, then it is preferable to use e.g. sodium or potassium citrate. If the acid is a roughly equal mix of two or more acids, then it is preferable that the conjugate base of the strongest acid is used. For example if the acid is a 50 / 50 mix of citric and malic acid, then a citrate is preferably used as the base. In this situation effectively only half of the acid (citric, $pK_{a1}$ = 3.1) is involved in the buffer whilst other half (malic, $pK_{a1}$ = 3.4) remains as free acid.

To determine the amount of base required for a given acid or mixture of acids in the product and desired pH, a pH curve can be obtained by a specific titration for the product, from which the amount of base can be determined using the method described in example 1 below. Alternatively, an initial estimate can be made on the basis of the pH curve for citrate / citric acid (see example 1). The pH can then be measured and adjusted accordingly by adding more acid or base, until the required value is achieved.

The organoleptic perception of acidity can be regulated by increasing or decreasing the concentration of the buffer system (taking into account acid present from fruit juices etc.). Preferable the buffer is present in an amount of at least 0.75wt %, more preferably at least 1wt%, since the greater the amount of buffer, the stronger the perception of acidity. Preferably the buffer is present in an amount of at most 3 wt %, more preferably at most 2 wt%, since if the concentration of the cation from the base is very high, the product can have salty / mineral off-flavours.

Frozen Confections

The frozen confection of the invention is preferably a water ice, a fruit ice, a sorbet or a frozen yoghurt. Water ice typically contains 15-25 wt% sugars / sweeteners / sugar replacers, together with stabilisers, colours and flavourings. Fruit ices are water ices which contain at least 10% fruit. Fruit means edible part of fruit or the equivalent as juice, extracts, concentrated or dehydrated products and so on. Fruit, pulp, juice or any other preparation may be used either fresh or preserved. Sorbets are aerated products. In addition to the ingredients present in water ices and fruit ices, they typically contain a whipping or aerating agent. Proteins (e.g. milk protein) are generally not present in water ices, fruit ices and sorbets, except in small amounts as stabilisers (e.g. gelatine) or aerating agents (e.g. hydrolysed whey protein). Frozen yoghurt typically contains sugars (typically in the range 15-25%), milk proteins (typically 5%) and fat (typically about 4% or less) together with stabilisers colours and flavourings. It is usually prepared by combining a mix of sugar, milk / cream, and minor ingredients with yoghurt that has already been cultured and which provides acidity. The mix is then pasteurized and frozen.

The frozen confections contain fructo-oligosaccharides, and preferably also comprise sugars (such as fructose, sucrose, dextrose and corn syrups) and / or sugar alcohols (such as maltitol, xylitol, glycerol and sorbitol) and / or artificial sweeteners (such as aspartame, saccharin, acesulfame K, alitame, thaumatin, cyclamate, glycyrrhizin, stevioside, neohesperidine, sucralose, monellin and neotame).

The frozen confections may be aerated or unaerated. By unaerated is meant an overrun of less then 20%, preferably less than 10%. An unaerated frozen confection is not subjected to deliberate steps such as whipping to increase the gas content. Nonetheless, it will be appreciated that during the preparation of unaerated frozen confections, low levels of gas, such as air, may be incorporated in the product. Aerated frozen confections have an overrun of more than 20%, preferably more than 50%, more preferably more than 75%. Preferably the frozen confection has an overrun of less than 200%, more preferably less than 150%, most preferably less than 120%. Overrun is defined by the equation below and is measured at atmospheric pressure.

$$\text{overrun \%} = \frac{\text{density of mix - density of frozen confection}}{\text{density of frozen confection}} \times 100$$

The frozen confections may be manufactured by any suitable process, for example a process comprising the steps of:

(a) preparing a mix of ingredients; then
(b) pasteurising and optionally homogenising the mix; then
(c) freezing and optionally aerating the mix to produce the frozen confection.

The present invention will now be further described with reference to the following examples, which are illustrative only and non-limiting, and to the figure wherein:

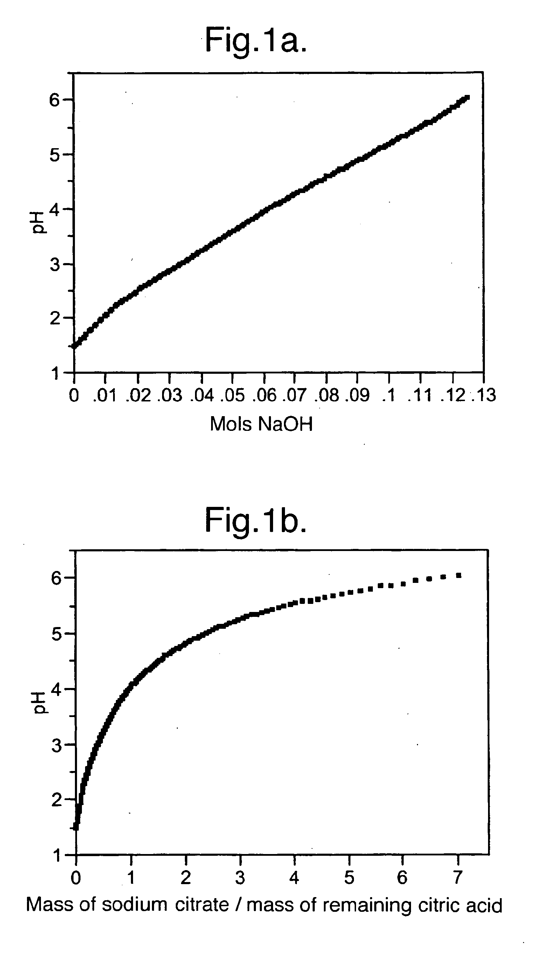

Figure 1 shows the pH curves for citric acid titrated with sodium hydroxide expressed in terms of (a) sodium hydroxide concentration and (b) ratio of sodium citrate to remaining citric acid.

**Examples**

Example 1: Buffer preparation

Example 1 demonstrates how to prepare a buffer with a desired pH. First, a 0.5 molar solution of citric acid was titrated using 1 molar sodium hydroxide solution at 18°C. The resulting titration curve is shown in Figure 1(a). As sodium hydroxide is added, some of the citric acid is neutralized to sodium citrate and the pH of the solution rises. The pH at any point along the titration curve is determined by the ratio of citric acid to citrate. At the concentrations typically used in food products, e.g. less than about 10 wt%, the pH essentially depends only on the ratio and is approximately independent of the concentration (pH is affected by ionic strength at higher buffer concentrations).

The amounts of citric acid and sodium citrate at any point on the curve can be calculated from the sodium hydroxide concentration and the initial citric acid concentration. The pH curve may then be expressed as a ratio of the concentrations of sodium citrate to citric acid, shown in Figure 1(b). From this curve, the ratio of sodium citrate : citric acid required for a buffer of the desired pH can be obtained. Some examples are given in Table 1. The first column is the desired buffer pH. The second column shows the ratio of sodium citrate to citric acid read off from Figure 1(b). The next three columns show the composition of the solution that was made and the final column gives the resulting actual solution pH. In each case, the actual pH is close to the desired pH.

Table 1

| Required pH | Na citrate : Citric acid | Na citrate (g) | Citric acid (g) | Water (ml) | Measured pH |
|---|---|---|---|---|---|
| 4.0 | 1.022:1 | 10.22 | 10 | 250ml | 4.08 |
| 4.5 | 1.542:1 | 15.42 | 10 | 250ml | 4.47 |
| 5.0 | 2.426:1 | 24.26 | 10 | 500ml | 4.90 |
| 5.5 | 4.070:1 | 40.70 | 10 | 500ml | 5.38 |

Example 2: Effect of pH and temperature on fructo-oligosacharides

Example 2 demonstrates the effect of the pH on the hydrolysis of fructo-oligosaccharides during pasteurization. Model mixes consisting of 100 g/L aqueous solutions of oligofructose (Raftilose™) and inulin (Raftiline™) were prepared. A number of aliquots were taken from each mix, and their pHs were adjusted to values ranging from 3.0 to 5.9 using a citric acid / sodium citrate buffer, as described in example 1. Samples were also prepared at pH 2.7, using 0.25% citric acid, and pH 7.0 (i.e. no buffer added). The samples were heated to 70°C for 20 minutes to simulate a normal mix process, rapidly heated to 83°C to simulate pasteurization and then rapidly cooled by quenching into ice. The concentration of fructose in each sample was measured using HPLC. In each case an unheated control sample was also measured. The resulting amounts of fructose (g/L) are shown in Table 2.

Table 2

| pH | Oligofructose (g/L) | | Inulin (g/L) | |
|---|---|---|---|---|
| | unheated | heated | unheated | heated |
| 7.0 | 4.7 | 5.2 | 0.9 | 0.9 |
| 5.9 | 5.0 | 5.8 | 1.0 | 0.9 |
| 5.5 | 4.9 | 5.6 | 1.1 | 0.6 |
| 5 . | 4.9 | 6.0 | 1.1 | 0.7 |
| 4.5 | 5.0 | 6.2 | 1.0 | 1.3 |
| 4 | 5.0 | 7.7 | 1.1 | 1.8 |
| 3 | 5.6 | 22.5 | 0.9 | 6.8 |
| 2.7 | 5.4 | 26.1 | 1.0 | 16.6 |

Oligofructose was Raftilose™ P95 was supplied by ORAFTI (Tienen, Belgium) and had a moisture content of 3 wt%. On a dry basis the Raftilose™ consisted of 95 wt% oligofructose and 5 wt% sugars (consisting of 3% sucrose, 1% fructose and 1% glucose). Inulin was Raftiline™ supplied by ORAFTI and had a moisture content of 3.8 wt%. On a dry basis, Raftiline consisted of 92 wt% fructo-oligo saccharide and 8 wt% sucrose, fructose and glucose.

A small amount of fructose is present in the unheated solutions from the Raftilose and Raftiline. Table 2 shows that the amount of fructose in the unheated samples did not vary significantly as the pH was lowered. In the heated samples, the amount of fructose increased slightly as the pH was lowered from 7.0 to 4.0. Below pH 4 the amount of fructose increased significantly, demonstrating that the oligofructose and inulin had been hydrolysed.

Example 3 - Water ices

Example 3 demonstrates water ices according to the invention, prepared to the formulation shown in Table 3. Three sodium citrate concentrations were used: 0.914, 1.64 and 2.75 wt%, resulting in mixes with expected pHs of 4.5, 5.0 and 5.5 respectively. A comparative example was made using the same formulation but without using a buffer salt (i.e. no sodium citrate). In order to raise the pH to above the level at which hydrolysis occurs, the citric acid monohydrate was also not included, and the citric acid present in the lemon juice was neutralized using 1 molar sodium hydroxide (to pH 5.1).

Table 3

| Ingredient (wt%) | Example 3A / 3B / 3C | Comparative example |
|---|---|---|
| Oligofructose | 7 | 7 |
| Fructose | 5 | 5 |
| Sucrose | 5 | 5 |
| Dextrose monohydrate | 4.9 | 4.9 |
| Sodium Citrate | 0.914/1.64/2.75 | 0 |
| Citric acid monohydrate | 0.4 | 0 |
| Lemon juice concentrate | 0.7 | 0.7 |
| Lemon / lime flavour | 0.3 | 0.3 |
| Curcumin | 0.03 | 0.03 |
| Locust bean gum | 0.2 | 0.2 |
| Sodium hydroxide (1 M) | 0 | To pH 5.1 |
| Water | To 100 | To 100 |

Water ice products in the form of ice lollies (approximately 100mls in volume) on sticks were prepared as follows. First the dry ingredients were mixed with hot water and stirred until they had completely dissolved. The mixes were then pasteurized at 83°C for 20 seconds, cooled to 18°C and the pH of each mix was measured. In each case the pH was within 0.1 of the target pH. The mixes were poured into moulds immersed in a brine bath at -40°C and sticks were inserted when the mix was partially frozen. After the products had frozen, they were removed from the moulds and stored at -18°C before being tasted. Examples 3A, 3B and 3C tasted fruity and acidic, but the comparative example had a bland taste, lacking in fruit flavour. Example 3A (pH 4.5) was judged to have the most authentic fruit flavour. Example 3C (pH 5.5) had an acceptable fruit flavour; it also had a small but noticeable salt / mineral flavour, arising from the relatively high concentration of buffer. Example 3 demonstrates that by using a buffer system according to the invention, it is possible to produce acidic-tasting frozen confections with a pH which avoids hydrolysis of fructo-oligosaccharides. In contrast, simply raising the pH avoids hydrolysis, but does not achieve the desired taste.

Example 4 - Fruit ices

Examples 4A and 4B are fruit ice formulations according to the invention, shown in Table 4. The formulations have a predicted pH of 4.5 for a 65°Brix orange juice concentrate containing 6.1% citric acid.

Table 4

| Ingredient (wt%) | Example 4A | Example 4B |
|---|---|---|
| Oligofructose | 0 | 7 |
| Inulin | 8.5 | 0 |
| Sucrose | 5 | 5 |
| Sodium Citrate | 2.35 | 2.35 |
| Orange juice concentrate | 25 | 25 |
| Orange Flavour | 0.3 | 0.3 |
| Locust bean gum | 0.25 | 0.25 |
| Water | To 100 | To 100 |

Example 5 - Sorbet

Example 5 is a sorbet formulation according to the invention (pH 4.5), shown in Table 5.

Table 5

| Ingredient (wt %) | Example 5 |
|---|---|
| Oligofructose | 7 |
| Pineapple juice | 75.95 |
| DE 63 Glucose-fructose corn syrup | 8 |
| DE 28 Corn syrup | 7.15 |
| Sodium citrate | 0.85 |
| Locust bean gum | 0.3 |
| Guar | 0.25 |
| Gelatin | 0.5 |

**Claims**

1. A frozen confection having a pH of from 4 to 6, comprising (by weight of the confection) 2-12% of fructo-oligosaccharides and 0.6-4% of a buffer.

2. A frozen confection according to claim 1 wherein the buffer comprises a weak acid selected from citric acid, malic acid, lactic acid, fumaric acid, ascorbic acid, tartaric acid, phosphoric acid or succinic acid and mixtures thereof.

3. A frozen confection according to claim 2 wherein the buffer comprises the sodium or potassium salt of the weak acid.

4. A frozen confection according to claim 3 wherein the buffer comprises citric acid and sodium citrate.

5. A frozen confection according to claims 1 to 4 wherein the pH is from 4.2 to 5.0.

6. A frozen confection according to claims 1 to 5 wherein the buffer is present in an amount of from 0.75 to 3 wt %.

7. A frozen confection according to claims 1 to 6 comprising 3-10 wt% fructo-oligosaccharides.

8. A frozen confection according to claims 1 to 7 wherein the fructo-oligosaccharide is selected from inulin, oligofructose, kestose and mixtures thereof.

9. A frozen confection according to claims 1 to 8 which is a water ice, a fruit ice, a sorbet or a frozen yoghurt.

**10.** A frozen confection according to claims 1 to 9 comprising less than 1 wt% protein.

**11.** A process for manufacturing a frozen confection according to any of claims 1 to 10, the process comprising the steps of:

(a) preparing a mix having a pH of from 4 to 6 and comprising 2-12 wt% fructo-oligosaccharides and 0.6-4wt% of a buffer;
(b) pasteurising and optionally homogenising the mix; then
(c) freezing and optionally aerating the mix to produce the frozen confection.

**Patentansprüche**

**1.** Gefrorene Süßware, die einen pH von 4 bis 6 hat, die (bezogen auf das Gewicht der Süßware) 2-12 % Fructo-Oligosaccharide und 0,6-4 % eines Puffers umfasst.

**2.** Gefrorene Süßware gemäß Anspruch 1, wobei der Puffer eine schwache Säure, ausgewählt aus Citronensäure, Äpfelsäure, Milchsäure, Fumarsäure, Ascorbinsäure, Weinsäure, Phosphorsäure oder Bernsteinsäure und Gemischen davon, umfasst.

**3.** Gefrorene Süßware gemäß Anspruch 2, wobei der Puffer das Natrium- oder Kaliumsalz der schwachen Säure umfasst.

**4.** Gefrorene Süßware gemäß Anspruch 3, wobei der Puffer Citronensäure und Natriumcitrat umfasst.

**5.** Gefrorene Süßware gemäß den Ansprüchen 1 bis 4, wobei der pH 4,2 bis 5,0 ist.

**6.** Gefrorene Süßware gemäß den Ansprüchen 1 bis 5, wobei der Puffer in einer Menge von 0,75 bis 3 Gewichts-% vorliegt.

**7.** Gefrorene Süßware gemäß den Ansprüchen 1 bis 6, die 3-10 Gewichts-% Fructo-Oligosaccharide umfasst.

**8.** Gefrorene Süßware gemäß den Ansprüchen 1 bis 7, wobei das Fructo-Oligosaccharid aus Inulin, Oligofructose, Kestose und Gemischen davon ausgewählt ist.

**9.** Gefrorene Süßware gemäß den Ansprüchen 1 bis 8, die ein Wassereis, ein Fruchteis, ein Sorbet oder ein gefrorener Jogurt ist.

**10.** Gefrorene Süßware gemäß den Ansprüchen 1 bis 9, die weniger als 1 Gewichts-% Protein umfasst.

**11.** Verfahren zur Herstellung einer gefrorenen Süßware gemäß einem der Ansprüche 1 bis 10, wobei das Verfahren die Schritte:

(a) Herstellen einer Mischung, die einen pH von 4 bis 6 hat und 2-12 Gewichts-% Fructo-Oligosaccharide und 0,6-4 Gewichts-% eines Puffers umfasst;
(b) Pasteurisieren und gegebenenfalls Homogenisieren der Mischung, danach
(c) Gefrieren und gegebenenfalls Belüften bzw. Aufschäumen der Mischung unter Herstellung der gefrorenen Süßware,

umfasst.

**Revendications**

**1.** Confiserie glacée ayant un pH allant de 4 à 6, comprenant (sur la base du poids de la confiserie) 2 % à 12 % de fructo-oligosaccharides et 0,6 % à 4 % d'un tampon.

**2.** Confiserie glacée selon la revendication 1, dans laquelle le tampon comprend un acide faible choisi parmi l'acide citrique, l'acide malique, l'acide lactique, l'acide fumarique, l'acide ascorbique, l'acide tartrique, l'acide phosphorique ou l'acide succinique et leurs mélanges.

3. Confiserie glacée selon la revendication 2, dans laquelle le tampon comprend le sel de sodium ou de potassium de l'acide faible.

4. Confiserie glacée selon la revendication 3, dans laquelle le tampon comprend de l'acide citrique et du citrate de sodium.

5. Confiserie glacée selon les revendications 1 à 4, dans laquelle le pH va de 4,2 à 5,0.

6. Confiserie glacée selon les revendications 1 à 5, dans laquelle le tampon est présent en une quantité allant de 0,75 % à 3 % en poids.

7. Confiserie glacée selon les revendications 1 à 6, comprenant 3 % à 10 % en poids de fructo-oligosaccharides.

8. Confiserie glacée selon les revendications 1 à 7, dans laquelle le fructo-oligosaccharide est choisi parmi l'inuline, l'oligofructose, le kestose et leurs mélanges.

9. Confiserie glacée selon les revendications 1 à 8, qui est une glace à l'eau, une glace aux fruits, un sorbet ou un yogourt glacé.

10. Confiserie glacée selon les revendications 1 à 9, comprenant moins de 1 % de protéine.

11. Procédé de fabrication d'une confiserie glacée selon les revendications 1 à 10, le procédé comprenant les étapes suivantes :

(a) la préparation d'un mélange ayant un pH allant de 4 à 6 et comprenant 2 % à 12 % de fructo-oligosaccharides et 0,6 % à 4 % d'un tampon ;
(b) la pasteurisation et éventuellement l'homogénéisation du mélange ; puis
(c) la congélation et éventuellement l'aérage du mélange pour produire une confiserie glacée.

# Fig.1a.

# Fig.1b.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 532775 A

- US 20030031758 A

**Non-patent literature cited in the description**

- **R. T. Marshall ; H. D. Goff ; R. W. Hartel.** Ice Cream. Kluwer Academic/Plenum Publishers, 2003